# EUROPEAN PATENT SPECIFICATION

(11) **EP 1 909 441 B1**
(45) Date of publication and mention of the grant of the patent: **10.12.2014**
(21) Application number: 07019388.3
(22) Date of filing: 03.10.2007
(51) Int. Cl.: H04W 4/08

(54) **Wireless communication method, device and data structure**
Drahtlose Kommunikationsverfahren, -einrichtung sowie Datenstruktur
Procédé et appareil de communication sans fil et structure de données

(30) Priority: 04.10.2006 US 828132 P; 28.09.2007 US 864705; 28.09.2007 US 864739
(43) Date of publication of application: 09.04.2008
(73) Proprietor: Industrial Technology Research Institute, Chutung, Hsinchu 310 (TW)
(72) Inventor: Sheen Wen-Ho, Minsyong Township Chiayi County 621 (TW); Ren, Fang-Ching, Siangshan District Hsinchu City 300 (TW); Lin, Tzu-Ming, Jhubei City Hsinchu County 302 (TW); Chou, Chie-Ming, Cingshuei Township Taichung County 436 (TW)
(74) Representative: Marchand, André

(56) References cited:
- EP-A2- 1 073 297
- EP-A2- 1 370 024
- WO-A2-2006/120669
- US-A1- 2003 123 404
- US-A1- 2005 232 183

## Description

### FIELD OF INVENTION

The application relates to wireless communication systems and methods of providing wireless communication, more particularly, to wireless communication systems, methods and related data structure.

### BACKGROUND

Communication systems, such as wireless communication systems, provide one or more communication networks that allow user terminals or mobile stations (users) to move within the network without losing the ability to continue or have communication with the network. To provide a network, a wireless communication relies on stations to transmit signals to users. However, each station has limited coverage due to the limitation on signal strength and the fact the signal strength degrades over distance. As the distance between users and stations increases, the strength of the signal received becomes lower and the transmission quality becomes lower. Additionally, signal quality and coverage may be affected by factors such as physical structures, signal interference, weather, transmission conditions, formats, etc. Therefore, coverage gaps or "holes" may exist and users in those areas may have limited or no network access.

One solution to avoid or reduce coverage holes is to provide more base stations to enhance the communication coverage and system capacity. However, system cost increases as the number of stations increases. As an alternative solution, a communication network may rely on relay stations, such as those implementing the concept of multi-hop relaying (MR). However, in some applications, the use of relaying stations may increase the need for station-to-station handovers and may require increased process overhead for handovers due to limited coverage areas of each relay station. In some applications, it also may reduce the spectrum efficiency because multiple transmissions are needed for multi-hop relays.

Another solution disclosed in EP 1 073 297 discloses a mobile communication network comprising stations divided into clusters each comprising a cluster station.

### SUMMARY OF INVENTION

Examples consistent with the present invention may provide methods for providing wireless communication through clustering of stations.

One example provides a method of providing wireless communication. The method includes providing a number of stations configured for transmitting signals wirelessly over at least one channel and dividing the stations into at least two clusters. The stations within each cluster may operate cooperatively to transmit or receive cluster-dependent signals simultaneously in a same time interval. The clusters are grouped into at least two groups such that stations within a same group but different clusters are configured for operating independently to transmit or receive cluster-dependent signals in the same time interval over the at least one channel, and stations belonging to different groups are configured to transmit cluster-dependent signals in distinctive time intervals; and stations in the same group being configured to avoid signal-transmission interference among the stations in the group.

Still another example provides a data structure for wireless communication. The data structure includes a first data section arranged to carry cluster-dependent signals simultaneously transmitted and received by stations in a first cluster and in a second cluster. The data structure also includes a second data section that may follow the first data section. The second data section is arranged to carry cluster-dependent signals simultaneously transmitted and received by stations in a third cluster and in a fourth cluster. The first data section and second data section may occupy two distinctive time intervals. The first and second clusters belong to a first group, and the third and fourth clusters belong to a second group, the first and second group being such that stations within a same group but different clusters are configured to operate independently to transmit or receive cluster-dependent signals over at least one channel and the stations in the same group are configured to avoid signal-transmission interference among the stations in the group.

Another example provides a wireless communication device comprising wireless communication device comprising: a number of stations configured to transmit signals wirelessly over at least one channel, and divided into at least two clusters, wherein the stations within each cluster are configured to operate cooperatively to transmit or receive cluster-dependent signals simultaneously in a same time interval. The clusters are grouped into at least two groups such that stations within a same group but different clusters are configured for operating independently to transmit or receive cluster-dependent signals in the same time interval over the at least one channel, stations belonging to different groups are configured to transmit cluster-dependent signals in distinctive time intervals, and stations within the same group being configured to avoid signal-transmission interference among the stations in the group.

### BRIEF DESCRIPTION OF THE SEVERAL VIEWS OF THE DRAWINGS

The foregoing summary, as well as the following detailed description of the invention, will be better understood when read in conjunction with the appended drawings.

In the drawings:

FIG. 1 is an exemplary data structure in the prior art;

FIG. 2 is an exemplary data structure for MR-enabled mode without applying a clustering process;

FIG. 3 a is an exemplary clustering process;

FIG. 3b is another exemplary clustering process;

FIG. 4 is an exemplary data structure for MR-enabled mode with exemplary clustering implemented;

FIG. 5 is an exemplary clustering and grouping process;

FIG. 6 is an exemplary data structure for MR-enabled mode with exemplary clustering and grouping implemented.

### DETAILED DESCRIPTION OF THE INVENTION

Examples of the invention may provide a method applicable to wireless communications and data structures applicable to wireless communications. In some examples, a method may include classifying stations, such as control stations, base stations, relay stations or mobile stations, into different clusters and groups. With clustering and grouping, the frequency spectrum may be used or reused to increase the bandwidth efficiency. Also the number of station-to-station handovers may be reduced. In some examples, cooperative transmission services or mechanisms may be used for stations in the same cluster. In some applications, examples of the invention may enhance network coverage and/or improve data throughput of a wireless network. Specifically, examples of the invention may provide one or more advantages in certain applications, such as increasing the utilization of radio resources, reducing the significant overhead needed by frequent handover processes, allowing frequency or channel reuse and supporting cooperative transmission services. As a result, a communication network with improved system capacity may be provided. In particular, methods or data structures illustrated below may be implemented in systems supporting multi-hop relaying (''MR") techniques.

A conventional channel grouping system or method may group terminals or nodes based on radio signal strength, as this may allow each node in a group to receive same or similar quality or strength of signals and provide same or similar quality of service. Examples of the present invention may divide stations into groups so that the stations in the same group can avoid or reduce interference among those stations. Also stations may be divided into clusters so that the stations in the same cluster may provide cooperative transmission services. In some examples, flexibilities may be provided to enable broad and flexible grouping and clustering, so that adjustments may be made to achieve one or more of various goals, such as system capacity and diversity in signals.

Some communication systems use techniques involving multiple antennas and certain pre-coding or coding techniques. Such systems may transmit various signals between groups of nodes or stations at the same time. Within a group, user terminals or mobile stations (users) may recognize the desired signals from the mixed or hybrid signals with co-channel interference and repeat the radio signal using a beam-forming technology by coordinating the transmission of the nodes in the same group. Examples of the invention may enable signal relay by redesigning the data structure and transmitting relayed signals in different frequency and time by scheduling techniques. In other words, relaying signals through multiple antennas may be avoided. Clustering in some examples may also extend service coverage and decrease the number of handovers.

Some other communication systems use path selection techniques. Each path may include one relay link between a base station and a relay station and one radio access link between a relay station and a user. By using steps such as tracking, forwarding, deciding and executing, one or more transmission paths available for transmitting signals from a base station to a user may be selected and an active set may be provided to provide information of the available paths for users. The information may be updated over time and several paths may be available at the same time to transmit the same data by cooperative transmission.

In examples of the present invention, stations belonging to the same cluster may operate cooperatively, such as by transmitting and receiving the same set of signals or data simultaneously. Additionally, stations belonging to the same group may reuse channels, which are usually provided within a frequency spectrum, to operate independently. In addition, a multi-hop relay data structure may be designed based on the concept of clustering and grouping to support radio resources allocation, and in some cases, to support data transmission for multi-hop relay services. In one example, some stations in the cluster may transmit only data signals without transmitting a preamble or a MAP message.

As an example, stations such as relay stations may be used by a wireless communication system to enhance the service coverage and/or increase the user throughput. In one example, an IEEE 802.16e system may be used to illustrate methods of applying clustering and grouping to a wireless communication system, such as an MR-enabled system. Such a system may be backward compatible with IEEE 802.16 systems or may be compatible with other systems to support radio resource allocations and data transmission.

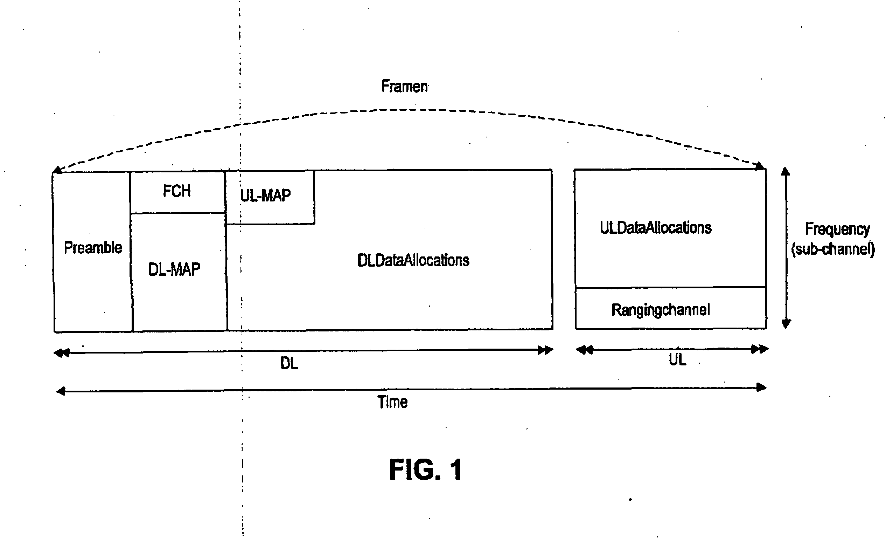

FIG. 1 illustrates an example of the data structure under an IEEE 802.16e PMP (point-to-multipoint) mode. A base station, used intermittently as a control station for associated relay stations, may transmit the preamble first to provide a reference for a subscribe station (SS) synchronization, which may include adjusting the timing offset, frequency offset, and/or power. In one example, a subscribe station is a station that follows the indication of a base station to transmit and receive data. Next to the preamble, information such as an FCH (Frame Control Header), a DL-MAP (downlink MAP) message, and/or a UL-MAP (uplink-MAP) message may be transmitted to provide certain information of a transmitted frame. In one example, The DL-MAP message and UL-MAP message may indicate the resource allocation of the frame. After the subscribe station decodes these messages, time slot and frequency assignments may be determined or allocated for receiving and/or transmitting data.

In one example of an MR system, relay stations may play two roles of base stations and subscribe stations. A base station may support downlink synchronization with relay stations and subscribe stations that are directly coupled with the base station and provide DL-MAP message and UL-MAP message to indicate resource allocation for relay stations and subscribe stations. In this case, relay stations may work in the same way as subscribe stations. On the other hand, a subscribe station that is coupled to a relay station may get the synchronization and allocation information from the relay station without going through the base station. In this example, the relay station may work like or as a base station. Therefore, in some examples of an MR-enabled system, the data structure may include a base-station preamble, base-station MAP message, relay-station preamble, and relay-station MAP message to be compatible with IEEE 802.16e and support MR techniques.

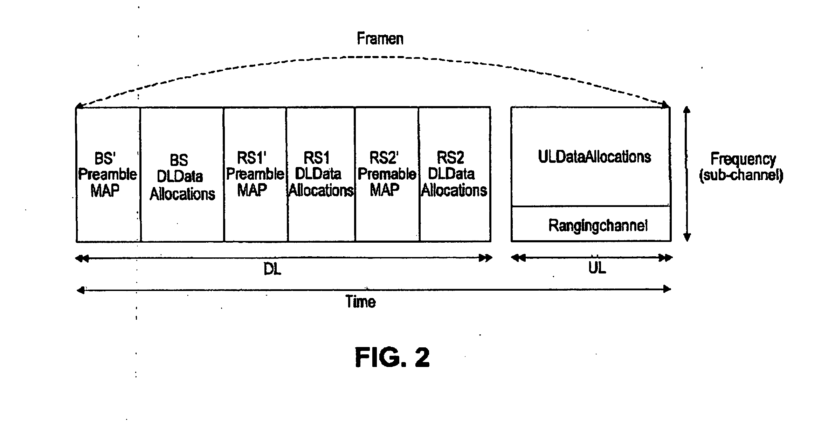

A simple way to achieve backward compatibility is to conduct time division in the data structure. FIG. 2 illustrates an example of a data structure where time division is applied to a communication network with one base station (BS) and two relay stations (RSs). A simple time division implementation may allow the base station and the two relay stations (RS1 and RS2) to transmit their own data, such as packets and control overhead, at different times. However, as the number of relay stations increases, the overhead needed for the preamble and MAP message also increases. Additionally, if the users of the communication network move frequently, such as among various relay stations, handovers may occur frequently to synchronize each user with different relay stations, which may include PHY (physical) level adjustments. This technique may reduce the system performance of an MR-enabled system.

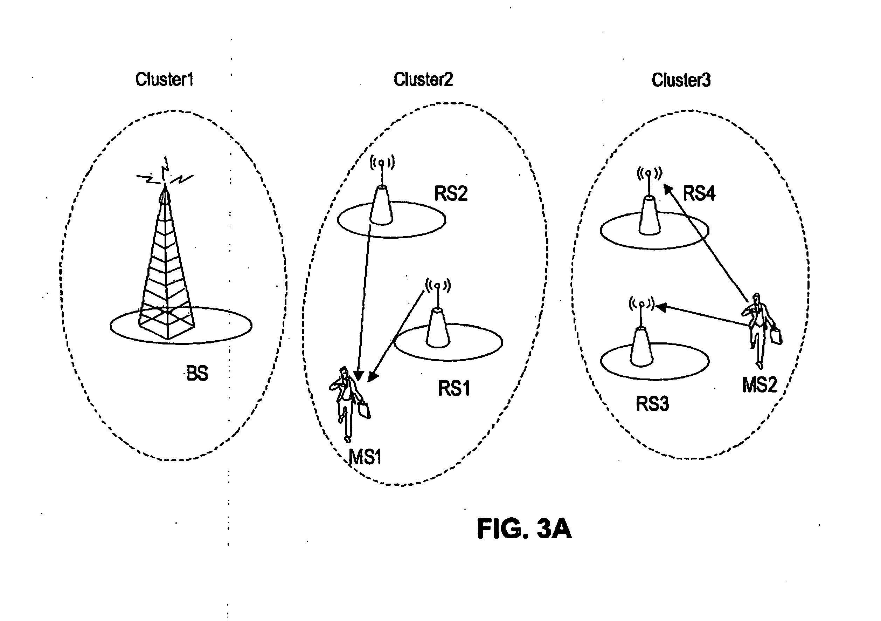

Examples of the invention may apply a clustering process and may provide a different data structure. FIG. 3a illustrates an example of a clustering process where a MR base station itself may be placed in one cluster, cluster 1, and relay stations may be divided into two or more clusters, such as cluster 2 (with RS and RS2) and cluster 3 (with RS3 and RS4) as illustrated. Cluster 1, cluster 2 and cluster 3 may be considered as a virtual group. With a MR base station included in the virtual group, relay stations function as transparent stations to mobile stations. All the relay stations within the same group either transmit the same set of signal information as that of the MR base station or may not transmit any signal information. The signal information may include the preamble, FCH and MAP message. The radio resources therefore may be shared by the base station and all the relay stations within the same group for data burst transmission. A cooperative service also allows the stations in the same cluster simultaneously to transmit and/or receive the same set of signal information. For users in this cluster, stations, such as one or more of base stations and relay stations, in the same cluster may provide the same preamble to provide users with synchronized signals in a multi-path manner. In other words, users may see signals coming from two or more stations as a combined signal coming from a station through multi-path transmission. Therefore, for stations in the same cluster, they may share the allocated radio resources and schedule the data transmission accordingly, such as in a sequential order. As a result, in one example, only one MAP message in a cluster is transmitted from all stations to indicate the scheduling for data transmission.

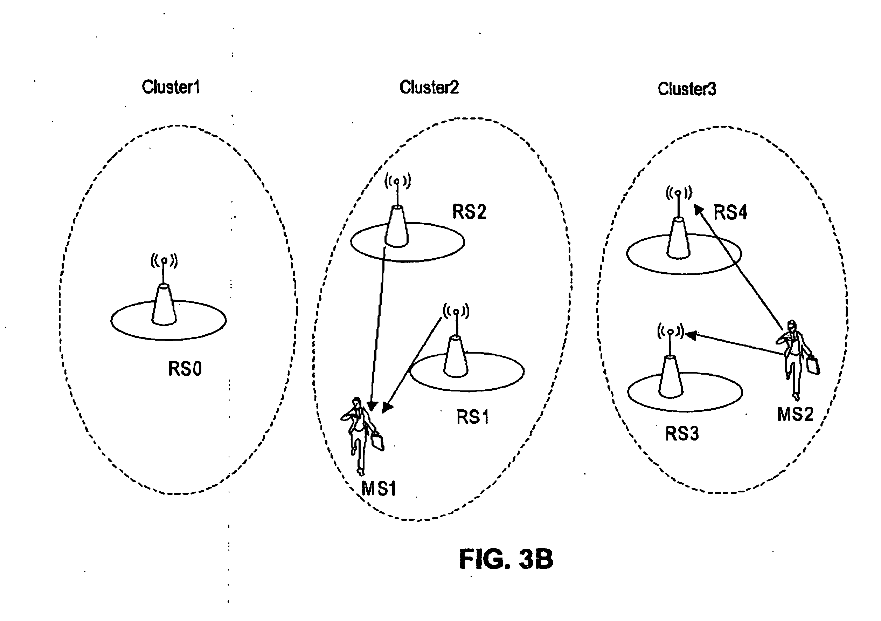

FIG. 3b illustrates an example of a clustering process applied to a plurality of relay stations in a group where no base station is included in the group. In the absence of a MR base station, one of the relay stations may become a group header of the group and may be non-transparent to mobile stations. As shown in FIG. 3b, one relay station, e.g. RS0 as a group header acting as a base station is placed in cluster 1. In this embodiment, RS0 is non-transparent to mobile stations. Other relay stations may be divided into two or more clusters, e.g. cluster 2 (with RS 1 and RS2) and cluster 3 (with RS3 and RS4). Cluster1, cluster 2 and cluster 3 are considered as a group without MR base station. All the relay stations within the same group may either transmit the same set of signal information as that of the non-transparent group header or may not transmit any signal information. The signal information may include the preamble, FCH and MAP message. The radio resources therefore may be shared by all the relay stations within the same group for data burst transmission. The group header may transmit the preamble, FCH and MAP message to mobile station and may be recognized as an ordinary base station by a mobile station. Using this clustering process, the group is transparent to its mobile station (s).

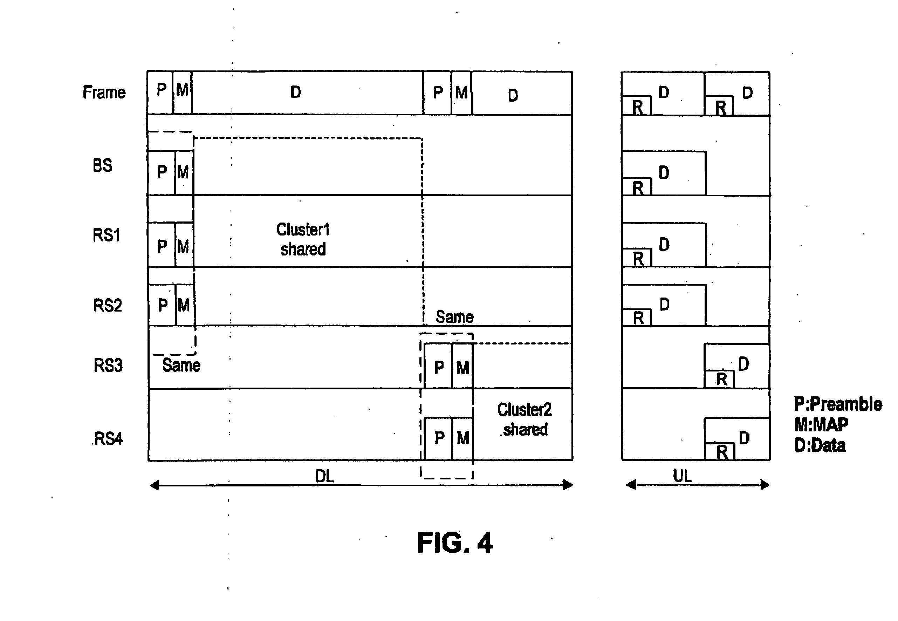

FIG. 4 illustrates a data structure according to one example of the invention. Referring to FIG. 4, all stations in the same cluster (Cluster 1) may transmit the same preamble and MAP message at the same time. This may avoid the need to transfer multiple control signals, such as in FIG. 2. Compared to FIG. 2, the data structure in FIG. 4 may improve the utilization of radio resources available for transmitting signals. In some examples, using the same preamble may also avoid the need for users or stations to perform handover processes frequently. In FIG. 4, R may represent a ranging channel in which a subscribe station can transmit a request to a base station in a content-based manner in one example. In some examples of the invention, a base station and associated relay station or stations may be placed in a single cluster of a wireless communication system, such as an MR-enabled system. This may reduce the amount of control signals or control signal overhead needed, thereby providing effective utilization of radio resources.

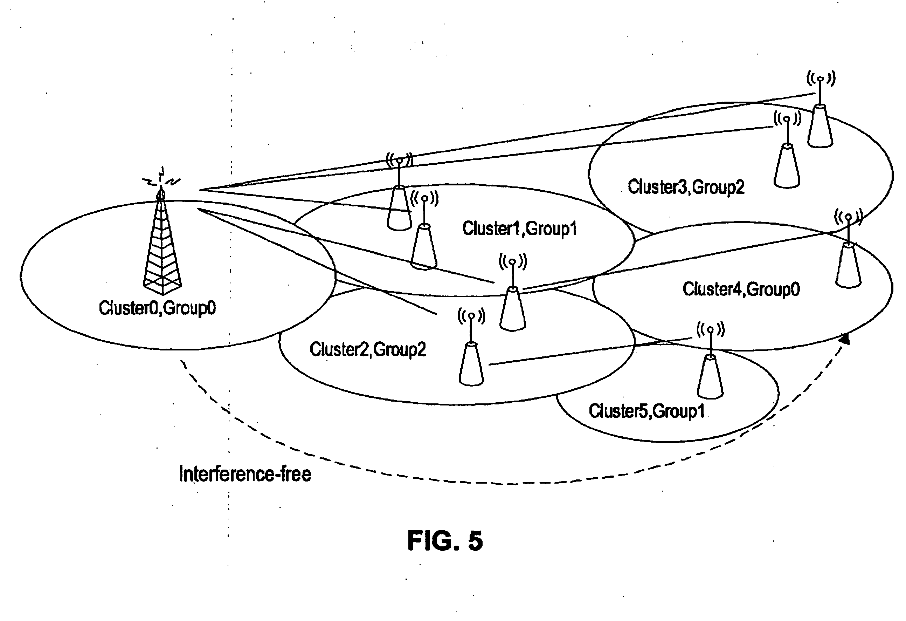

If all of the stations in a network share the common resources carrying the same signals or contents, the limited bandwidth of one channel limits the amount of data that can be transferred. In other words, there is no frequency or bandwidth reuse to better utilize the available bandwidth. In one example of the present invention, the size of or the number of stations in a cluster may be reduced. Also, stations that are interference-free or that have limited signal interference among themselves may be placed in one group. FIG. 5 illustrates an example of grouping clusters or stations together according to the level of interferences among clusters or stations. In particular, two or more clusters that do not interfere or significantly interfere with each other may be grouped together in one group. Also, two or more clusters that interfere with each other may be placed in different groups.

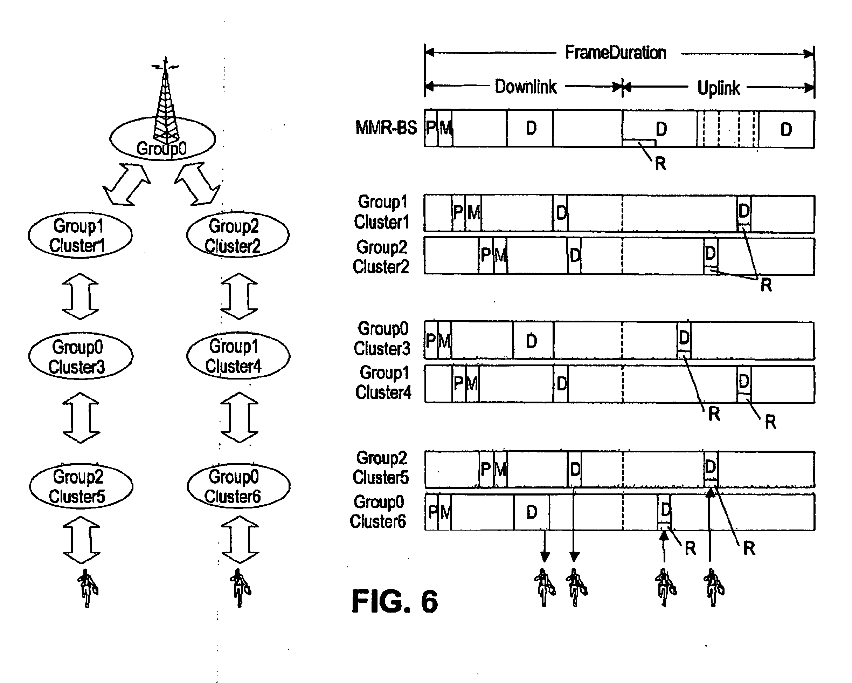

In one example of the invention, different clusters in the same group may transmit cluster-dependent signals, such as cluster-dependent control signals and user data, which may differ from cluster to cluster. Due to the nature of the grouping illustrated above, the cluster-dependent signals from different clusters do not or rarely interfere with each other. Therefore, more than one set of data or signals may be transmitted simultaneously to provide better bandwidth usage. FIG. 6 illustrates an exemplary data structure that can be designed based on this concept. Referring to FIG. 6, resources allocated to a group may be used independently by all other clusters in the same group. In other words, stations of different clusters but of the same group may reuse the same channel or the same bandwidth to transfer different sets of data or signals. In some examples, techniques combining clustering and grouping may reduce frequent handovers and/or improve the utilization of radio resources.

It will be appreciated by those skilled in the art that changes could be made to the examples described above without departing from the broad inventive concept thereof. It is understood, therefore, that this invention is not limited to the particular examples or embodiments disclosed, but it is intended to cover modifications within the scope of the present invention as defined by the appended claims.

## Claims

1. A method of providing wireless communication, the method comprising:
providing a number of stations (BS, RS0, RS1, RS2, RS3, RS4, MS1, MS2) configured to transmit signals wirelessly over at least one channel;
dividing the stations into at least two clusters (Cluster1, Cluster2, Cluster3); and
configuring stations within each cluster for operating cooperatively to transmit or receive cluster-dependent signals simultaneously in a same time interval;
**characterized in that** it further comprises:
grouping the clusters into at least two groups such that stations within a same group but different clusters are configured to operate independently to transmit or receive cluster-dependent signals in the same time interval over the at least one channel, and stations belonging to different groups are configured to transmit cluster-dependent signals in distinctive time intervals; and
configuring the stations in the same group to avoid signal-transmission interference among the stations in the group.

2. The method of claim 1, wherein at least one of the stations comprises a relay station (RS0, RS1, RS2, RS3, RS4).

3. The method of claim 1 or 2, wherein the relay station (RS0, RS1, RS2, RS3, RS4) comprises one of a transparent relay station and a non-transparent relay station (RS0).

4. The method of one of claims 1 to 3, wherein at least one of the stations comprises a control station.

5. The method of one of claims 1 to 4, further comprising transmitting a single set of signals for stations within a cluster.

6. The method of one of claims 1 to 5, wherein the signals comprise at least one of a preamble, a MAP message and data.

7. The method of one of claims 1 to 6, wherein the at least one channel comprises one of a physical channel and a logical channel.

8. The method of one of claims 1 to 7, wherein the signals comprise at least one of a preamble, a MAP message, and data.

9. A data structure for wireless communication, the data structure comprising:
a first data section arranged to carry cluster-dependent signals simultaneously transmitted and received by stations in a first cluster and in a second cluster; and
a second data section, following the first data section, arranged to carry cluster-dependent signals simultaneously transmitted and received by stations in a third cluster and in a fourth cluster, the first data section and second data section occupying two distinctive time intervals,
**characterized in that** the first and second clusters belong to a first group, and the third and fourth clusters belong to a second group, the first and second group being such that stations within a same group but different clusters are configured to operate independently to transmit or receive cluster-dependent signals over at least one channel and the stations in the same group are configured to avoid signal-transmission interference among the stations in the group.

10. The data structure of claim 9, wherein at least one of the stations comprises a relay station.

11. The data structure of claim 10, wherein the relay station comprises one of a transparent relay station and a non-transparent relay station.

12. The data structure of one of claims 9 to 11, wherein at least one of the stations comprises a control station.

13. A wireless communication device comprising:
a number of stations (BS, RS0, RS1, RS2, RS3, RS4, MS1, MS2) configured to transmit signals wirelessly over at least one channel, and divided into at least two clusters (Cluster1, Cluster2, Cluster3),
the stations within each cluster being configured to operate cooperatively to transmit or receive cluster-dependent signals simultaneously in a same time interval;
**characterized in that** the clusters are grouped into at least two groups such that stations within a same group but different clusters are configured to operate independently to transmit or receive cluster-dependent signals in the same time interval over the at least one channel, and stations belonging to different groups are configured to transmit cluster-dependent signals in distinctive time intervals; and
stations within the same group being configured to avoid signal-transmission interference among the stations in the group.

14. The device of claim 13, wherein at least one channel and at least one of the stations is configured to transmit only data signals without transmitting at least one of a preamble and a MAP message.

15. The device of claim 13 or 14, wherein the station comprises a relay station.

16. The device of one of claims 13 to 15, wherein the relay station comprises one of a transparent relay station and a non-transparent relay station.

17. The device of one of claims 13 to 16, wherein the station comprises a control station.

18. The device of one of claims 13 to 17, wherein the signals comprise at least one of a preamble, a MAP message and data.

19. The device of one of claims 13 to 18, wherein the stations within the first cluster transmit one set of signals.

20. The device of one of claims 13 to 19 further comprising a second cluster, the first cluster and the second cluster being grouped into a group, wherein the stations in the group are configured to avoid signal-transmission interference among the stations.

21. The device of claim 20, wherein the stations within the group transmit different sets of signals.

## Patentansprüche

1. Verfahren zur drahtlosen Kommunikation, umfassend die folgenden Schritte, die darin bestehen:
eine Anzahl von Stationen (BS, RS0, RS1, RS2, RS3, RS4, MS1, MS2) vorzusehen, die so konfiguriert sind, dass sie Signale über wenigstens einen Kanal drahtlos übertragen;
die Stationen in wenigstens zwei Cluster (Cluster1, Cluster2, Cluster3) aufzuteilen; und
die Stationen innerhalb jedes Clusters so zu konfigurieren, dass sie kooperativ zum gleichzeitigen Übertragen oder Empfangen von clusterabhängigen Signalen in einem selben Zeitintervall arbeiten;
**dadurch gekennzeichnet, dass** es auch die Schritte umfasst, die darin bestehen:
die Cluster in wenigstens zwei Gruppen so zu gruppieren, dass die zu einer selben Gruppe aber zu verschiedenen Clustern gehörenden Stationen so konfiguriert sind, dass sie unabhängig voneinander zum Übertragen oder Empfangen von clusterabhängigen Signalen in demselben Zeitintervall über den wenigstens einen Kanal arbeiten, und dass die zu verschiedenen Gruppen gehörenden Stationen so konfiguriert sind, dass sie clusterabhängige Signale in unterschiedlichen Zeitintervallen übertragen; und
die Stationen derselben Gruppe so zu konfigurieren, dass jede Interferenz bei der Signalübertragung zwischen den Stationen der Gruppe vermieden wird.

2. Verfahren nach Anspruch 1, bei dem wenigstens eine der Stationen eine Relaisstation (RSO, RS1, RS2, RS3, RS4) umfasst.

3. Verfahren nach Anspruch 1 oder 2, bei dem die Relaisstation (RSO, RS1, RS2, RS3, RS4) eine transparente Relaisstation oder eine nicht transparente Relaisstation (RSO) umfasst.

4. Verfahren nach einem der Ansprüche 1 bis 3, bei dem wenigstens eine der Stationen eine Prüfstation umfasst.

5. Verfahren nach einem der Ansprüche 1 bis 4, umfassend auch das Übertragen eines einzigen Satzes von Signalen für die Stationen innerhalb eines Clusters.

6. Verfahren nach einem der Ansprüche 1 bis 5, bei dem die Signale wenigstens entweder eine Präambel, eine MAP Nachricht, oder Daten umfassen.

7. Verfahren nach einem der Ansprüche 1 bis 6, bei dem der wenigstens eine Kanal einen physischen Kanal oder einen logischen Kanal umfasst.

8. Verfahren nach einem der Ansprüche 1 bis 7, bei dem die Signale wenigstens entweder eine Präambel, eine MAP Nachricht oder Daten umfassen.

9. Datenstruktur zur drahtlosen Kommunikation, umfassend:
einen ersten Datenabschnitt, der angeordnet ist, um von Stationen eines ersten Clusters und eines zweiten Clusters gleichzeitig übertragene und empfangene clusterabhängige Signale zu leiten; und
einen zweiten, dem ersten Datenabschnitt folgenden Datenabschnitt, der angeordnet ist, um von Stationen eines dritten Clusters und eines vierten Clusters gleichzeitig übertragene und empfangene clusterabhängigen Signale zu leiten, wobei der erste Datenabschnitt und der zweite Datenabschnitt zwei unterschiedliche Zeitintervalle abdecken,
**dadurch gekennzeichnet, dass** der erste und der zweite Cluster zu einer ersten Gruppe gehören, und der dritte und der vierte Cluster zu einer zweiten Gruppe gehören, wobei die erste und die zweite Gruppe derart sind, dass die zu einer selben Gruppe aber zu verschiedenen Clustern gehörenden Stationen so konfiguriert sind, dass sie unabhängig voneinander zum Übertragen oder Empfangen von clusterabhängigen Signalen über wenigstens einen Kanal arbeiten, und dass die Stationen derselben Gruppe so konfiguriert sind, dass jede Interferenz bei der Signalübertragung zwischen den Stationen der Gruppe vermieden wird.

10. Datenstruktur nach Anspruch 9, bei der wenigstens eine der Stationen eine Relaisstation umfasst.

11. Datenstruktur nach Anspruch 10, bei der die Relaisstation eine transparente Relaisstation oder eine nicht transparente Relaisstation umfasst.

12. Datenstruktur nach einem der Ansprüche 9 bis 11, bei der wenigstens eine der Stationen eine Prüfstation umfasst.

13. Vorrichtung zur drahtlosen Kommunikation, umfassend:
eine Anzahl von Stationen (BS, RS0, RS1, RS2, RS3, RS4, MS1, MS2), die so konfiguriert sind, dass sie Signale über wenigstens einen Kanal drahtlos übertragen, und die wenigstens in zwei Cluster (Cluster1, Cluster2, Cluster3) aufgeteilt sind,
wobei die Stationen innerhalb jedes Clusters so konfiguriert sind, dass sie kooperativ zum gleichzeitigen Übertragen oder Empfangen von clusterabhängigen Signalen in einem selben Zeitintervall arbeiten;
**dadurch gekennzeichnet, dass** die Cluster in wenigstens zwei Gruppen so gruppiert sind, dass die zu einer selben Gruppe aber zu verschiedenen Clustern gehörenden Stationen so konfiguriert sind, dass sie unabhängig voneinander zum Übertragen oder Empfangen von clusterabhängigen Signalen in demselben Zeitintervall über den wenigstens einen Kanal arbeiten, und dass die zu verschiedenen Gruppen gehörenden Stationen so konfiguriert sind, dass sie clusterabhängige Signale in unterschiedlichen Zeitintervallen übertragen; und
wobei die zur selben Gruppe gehörenden Stationen so konfiguriert sind, dass jede Interferenz bei der Signalübertragung zwischen den Stationen der Gruppe vermieden wird.

14. Vorrichtung nach Anspruch 13, bei der wenigstens ein Kanal und wenigstens eine der Stationen so konfiguriert sind, dass sie nur Datensignale übertragen, ohne wenigstens eine Präambel oder eine MAP Nachricht zu übertragen.

15. Vorrichtung nach Anspruch 13 oder 14, bei der die Station eine Relaisstation umfasst.

16. Vorrichtung nach einem der Ansprüche 13 bis 15, bei der die Relaisstation eine transparente Relaisstation oder eine nicht transparente Relaisstation umfasst.

17. Vorrichtung nach einem der Ansprüche 13 bis 16, bei der die Station eine Prüfstation umfasst.

18. Vorrichtung nach einem der Ansprüche 13 bis 17, bei der die Signale wenigstens entweder eine Präambel, eine MAP Nachricht oder Daten umfassen.

19. Vorrichtung nach einem der Ansprüche 13 bis 18, bei der die zum ersten Cluster gehörenden Stationen einen Satz von Signalen übertragen.

20. Vorrichtung nach einem der Ansprüche 13 bis 19, umfassend auch einen zweiten Cluster, wobei der erste Cluster und der zweite Cluster in einer Gruppe gruppiert sind, bei der die Stationen der Gruppe so konfiguriert sind, dass jede Interferenz bei der Signalübertragung zwischen den Stationen vermieden wird.

21. Vorrichtung nach Anspruch 20, bei der die zur Gruppe gehörenden Stationen verschiedene Sätze von Signalen übertragen.

## Revendications

1. Procédé pour assurer une communication sans fil, le procédé comprenant les étapes consistant à :
prévoir un certain nombre de stations (BS, RS0, RS1, RS2, RS3, RS4, MS1, MS2) configurées pour transmettre des signaux sans fil sur au moins un canal ;
diviser les stations en au moins deux clusters (Cluster1, Cluster2, Cluster3) ; et
configurer les stations à l'intérieur de chaque cluster afin qu'elles fonctionnent de manière coopérative pour transmettre ou recevoir des signaux dépendant du cluster de manière simultanée dans un même intervalle de temps ;
**caractérisé en ce qu'**il comprend en outre les étapes consistant à :
grouper les clusters en au moins deux groupes, de sorte que les stations appartenant à un même groupe mais à des clusters différents sont configurées pour fonctionner de manière indépendante pour transmettre ou recevoir des signaux dépendant du cluster dans le même intervalle de temps sur l'au moins un canal, et que les stations appartenant à des groupes différents sont configurées pour transmettre des signaux dépendant du cluster dans des intervalles de temps distincts ; et
configurer les stations du même groupe de manière à éviter toute interférence dans la transmission de signaux entre les stations du groupe.

2. Procédé selon la revendication 1, dans lequel au moins une des stations comprend une station-relais (RS0, RS1, RS2, RS3, RS4).

3. Procédé selon la revendication 1 ou 2, dans lequel la station-relais (RS0, RS1, RS2, RS3, RS4) comprend une station-relais transparente ou une station-relais non transparente (RS0).

4. Procédé selon l'une des revendications 1 à 3, dans lequel au moins une des stations comprend une station de contrôle.

5. Procédé selon l'une des revendications 1 à 4, comprenant en outre la transmission d'un seul ensemble de signaux pour les stations à l'intérieur d'un cluster.

6. Procédé selon l'une des revendications 1 à 5, dans lequel les signaux comprennent au moins soit un préambule, soit un message MAP, soit des données.

7. Procédé selon l'une des revendications 1 à 6, dans lequel l'au moins un canal comprend un canal physique ou un canal logique.

8. Procédé selon l'une des revendications 1 à 7, dans lequel les signaux comprennent au moins soit un préambule, soit un message MAP, soit des données.

9. Structure de données pour assurer une communication sans fil, la structure de données comprenant :
une première section de données agencée pour acheminer des signaux dépendant du cluster transmis et reçus simultanément par des stations d'un premier cluster et d'un second cluster ; et
une seconde section de données, qui suit la première section de données, agencée pour acheminer des signaux dépendant du cluster transmis et reçus simultanément par des stations d'un troisième cluster et d'un quatrième cluster, la première section de données et la seconde section de données occupant deux intervalles de temps distincts,
**caractérisé en ce que** le premier et le second clusters appartiennent à un premier groupe, et le troisième et le quatrième clusters appartiennent à un second groupe, le premier et le second groupe étant tels que les stations appartenant à un même groupe mais à des clusters différents sont configurées pour fonctionner de manière indépendante pour transmettre ou recevoir des signaux dépendant du cluster sur au moins un canal, et que les stations du même groupe sont configurées de manière à éviter toute interférence dans la transmission de signaux entre les stations du groupe.

10. Structure de données selon la revendication 9, dans laquelle au moins une des stations comprend une station-relais.

11. Structure de données selon la revendication 10, dans laquelle la station-relais comprend une station-relais transparente ou une station-relais non transparente.

12. Structure de données selon l'une des revendications 9 à 11, dans laquelle au moins une des stations comprend une station de contrôle.

13. Dispositif de communication sans fil comprenant :
un certain nombre de stations (BS, RS0, RS1, RS2, RS3, RS4, MS1, MS2) configurées pour transmettre des signaux sans fil sur au moins un canal, et divisées en au moins deux clusters (Cluster1, Cluster2, Cluster3),
les stations à l'intérieur de chaque cluster étant configurées pour fonctionner de manière coopérative pour transmettre ou recevoir des signaux dépendant du cluster simultanément dans un même intervalle de temps ;
**caractérisé en ce que** les clusters sont groupés en au moins deux groupes, de sorte que les stations appartenant à un même groupe mais à des clusters différents sont configurées pour fonctionner de manière indépendante pour transmettre ou recevoir des signaux dépendant du cluster dans le même intervalle de temps sur l'au moins un canal, et que les stations appartenant à des groupes différents sont configurées pour transmettre des signaux dépendant du cluster dans des intervalles de temps distincts ; et
les stations appartenant au même groupe étant configurées pour éviter toute interférence dans la transmission de signaux entre les stations du groupe.

14. Dispositif selon la revendication 13, dans lequel au moins un canal et au moins une des stations sont configurés pour transmettre uniquement des signaux de données sans transmettre au moins un préambule ou un message MAP.

15. Dispositif selon la revendication 13 ou 14, dans lequel la station comprend une station-relais.

16. Dispositif selon l'une des revendications 13 à 15, dans lequel la station-relais comprend une station-relais transparente ou une station-relais non transparente.

17. Dispositif selon l'une des revendications 13 à 16, dans lequel la station comprend une station de contrôle.

18. Dispositif selon l'une des revendications 13 à 17, dans lequel les signaux comprennent au moins soit un préambule, soit un message MAP, soit des données.

19. Dispositif selon l'une des revendications 13 à 18, dans lequel les stations appartenant au premier cluster transmettent un ensemble de signaux.

20. Dispositif selon l'une des revendications 13 à 19 comprenant en outre un second cluster, le premier cluster et le second cluster étant groupés en un groupe, dans lequel les stations du groupe sont configurées de manière à éviter toute interférence dans la transmission de signaux entre les stations.

21. Dispositif selon la revendication 20, dans lequel les stations appartenant au groupe transmettent différents ensembles de signaux.
